# EUROPÄISCHE PATENTSCHRIFT

(11) **EP 2 468 497 B1**
(45) Veröffentlichungstag und Bekanntmachung des Hinweises auf die Patenterteilung: **13.11.2013**
(21) Anmeldenummer: 11193704.1
(22) Anmeldetag: 15.12.2011
(51) Int. Cl.: B32B 5/26, B32B 5/28, B32B 27/12, C09J 7/02

(54) **Verbundbahn für die Verklebung von flachen Bauelementen**
Compound sheet for sticking flat components
Bande composite pour le collage de composants plats

(30) Priorität: 23.12.2010 DE 102010061552
(43) Veröffentlichungstag der Anmeldung: 27.06.2012
(73) Patentinhaber: Oxiegen GmbH, 33175 Bad Lippspringe (DE)
(72) Erfinder: Watermann, Heinfried, 33175 Bad Lippspringe (DE)
(74) Vertreter: Reimann, Silke

(56) Entgegenhaltungen:
- EP-A1- 1 721 734
- EP-A2- 1 035 269
- DE-U1- 29 704 323
- DE-U1-202004 000 499

## Beschreibung

Die Erfindung betrifft eine Verbundbahn für die Verklebung von flachen Bauelementen, insbesondere Glasscheiben, auf harten Untergründen.

Für die Verkleidung von Oberflächen sind diverse Bauelemente bekannt, die auf die Untergründe aufgeklebt werden. So werden Keramik-Fliesen mit einem Fliesenkleber auf harte Untergründe aufgeklebt. Für erhöhte Anforderungen ist aus der Gebrauchsmusterschrift DE 20 2004 000 499 U1 eine Verbundbahn bekannt, die besonders für die Verlegung von Bodenbelägen geeignet ist. Sie zeichnet sich insbesondere durch eine gute Trittschalldämpfung aus.
Schwierigkeiten bereiten Glasscheiben, die an harten Untergründen befestigt werden sollen. Die Materialveränderungen durch Temperaturschwankungen sind durch bekannte Verbundbahnen nicht dauerhaft auszugleichen und die Glasscheiben können sich von den Untergründen lösen. Häufig werden daher für die Befestigung von Glasscheiben mechanische Halterungen eingesetzt.
Aus der Patentschrift EP 0 700 776 B 1 ist eine Verbundmörtel bekannt, mit dem Glasscheiben auf einem festen Untergrund verklebt werden sollen. Dieser Verbundmörtel muss auf der Baustelle auf eine Glasscheibe aufgebracht werden und dort aushärten. Dies ist kompliziert und erfordert beim Bauen eine entsprechende Zeit. In der Patentschrift EP 0 790 370 B 1 ist ein ähnlicher Verbundmörtel beschrieben, der genauso auf der Baustelle vor Ort aufgebracht werden muss.

In der Gebrauchsmusterschrift 297 04 323 U1 ist eine Dichtbahn beschrieben, die zwei Vliese mit einer Zwischenschicht besitzt. Die Zwischenschicht ist wasserdampfdurchlässig und wasserundurchlässig. Damit ist diese Zwischenschicht nicht für feuchtigkeitsempfindliche Bauelemente, wie Spiegel, geeignet.

Es ist daher Aufgabe der Erfindung, eine Verbundbahn vorzuschlagen, die für die dauerhafte Befestigung von flachen Bauelementen wie Glasscheiben und auch feuchtigkeitsempfindlichen Bauelementen wie Spiegeln geeignet ist und auf einer Baustelle einfach verarbeitet werden kann.

Diese Aufgabe wird durch die Merkmale des Anspruchs 1 gelöst.
Vorteilhafte Ausgestaltungen der Verbundbahn sind in den Unteransprüchen angegeben.
Die Verbundbahn für die Verklebung von flachen Bauelementen auf harten Untergründen, besteht aus fest miteinander verbundenen Schichten. Die Basis ist eine Kunststofffolie mit einer darüber legenden Gewebeschicht und darüber einer Abdeckvliesschicht. In die Gewebeschicht ist ein mineralischer Füllstoff mit einem darin gebundenen Kunststoffkleber eingebracht.
Die Schichten sind mittels einer Kaschieranlage luftpolsterfrei miteinander verbunden. Diese Verbundbahn ist besonders für die Befestigung von Glasscheiben vorgesehen, kann aber auch für andere flache Bauelemente, wie Keramikplatten, Kunststoff, Metall, Holz oder ähnlichem genutzt werden.
Die Verbundbahn wird auf der Rückseite der Bauelemente aufgeklebt und gestattet das sichere und haltbare Verkleben großer Formate der Bauelemente.

Die Gewebeschicht der Verbundbahn besitzt ein grobes Raster mit einer Maschenweite von 1,5 bis 4 mm mal 3 bis 8 mm. In den Maschen ist der mineralische Füllstoff mit dem darin gebundenen Kunststoffkleber eingebracht.
Dabei wird als Füllstoff vorzugsweise Sand genutzt, es kann aber auch Quarzmehl oder ähnliches sein. Dieser Füllstoff wird mit einem Kunststoffkleber gebunden. Als Kunststoffkleber können verschiedene Hotmelt-Kleber, wie EVA, genutzt werden.

Die Gewebeschicht besteht vorzugsweise aus Kunststofffasern. Ebenso wird vorzugsweise ein Abdeckvlies aus Kunststofffasern genutzt.

Mit dem beschriebenen Aufbau der mehrschichtigen Verbundbahn wird eine Gesamtdicke zwischen 0,5 mm und 5 mm erreicht und kann so für verschieden große oder schwere Bauelemente genutzt werden.

Das Aufkleben der Verbundbahn auf die Bauelemente wird durch eine Selbstklebeschicht erleichtert, die auf die Kunststofffolie aufgebracht ist. Diese ist vor der Verlegung der Verbundbahn mit einer Schutzfolie abgedeckt. Somit kann die Verbundbahn als Rollenware auf die Baustelle geliefert und vor Ort auf die Bauelemente geklebt werden. Es ist aber auch eine Verarbeitung der Verbundbahn direkt beim Hersteller der Bauelemente möglich.

In den Figuren ist die eine Ausführung der Verbundbahn beispielhaft dargestellt.
Fig. 1 zeigt den Schichtenaufbau der Verbundbahn.
Fig. 2 zeigt eine Aufsicht auf die maschenförmige Gewebeschicht.
Fig. 3 zeigt schematisch das auf einen Untergrund aufgebrachte Bauelement.

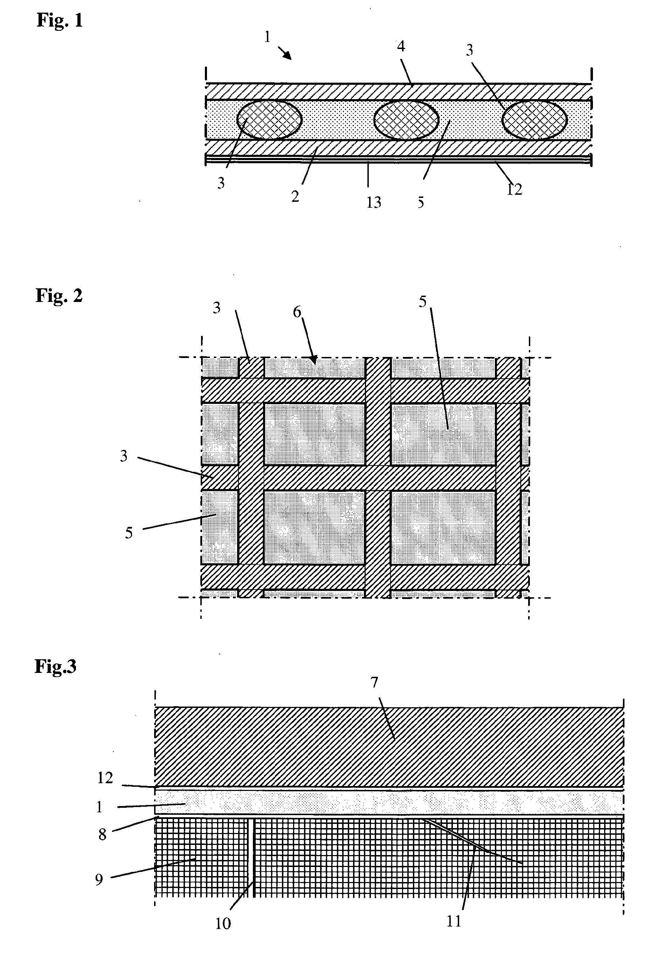

In Fig. 1 ist der geschichtete Aufbau der Verbundbahn 1 dargestellt. Sie besteht aus der unteren Kunststofffolie 2, der Gewebeschicht 3 und der oberen Abdeckvliesschicht 4. In die Gewebeschicht 3 ist die Mischung aus Sand mit Kunststoffkleber eingepresst. Somit ergibt sich eine flache, kompakte Verbundbahn, die sich gut verlegen und verkleben lässt. Die Füllmenge an Sand-Kunststoffkleber-Mischung beträgt vorzugsweise, je nach Gewebeart, 0,1 Gramm bis 0,4 Gramm pro Quadratzentimeter.
Die drei Schichten sind luftpolsterfrei verbunden.
Auf der unteren Kunststofffolie 2 sind noch die Selbstklebeschicht 12 und die Schutzfolie 13 aufgebracht.

In Fig. 2 ist eine Draufsicht der Verbundbahn gezeigt. Die Gewebeschicht 3 bildet ein weitmaschiges Raster 6, in das die Sand-Kunststoffkleber-Mischung eingepresst ist. Die Maschenweite des Gewebes ist vorzugsweise 1,5 bis 4 mm mal 3 bis 8 mm. Das Vlies und das Gewebe sind vorzugsweise aus Kunststofffasern hergestellt.

In Fig. 3 ist der Aufbau einer Verkleidung eines Untergrundes 9 mit einem Bauelement 7 mittels der Verbundbahn 1 im Querschnitt dargestellt. Auf den Untergrund 9 ist die Verbundbahn 1 mit einem geeigneten Kleber 8, beispielsweise Fliesenkleber, über das Abdeckvlies aufgeklebt. Auf dieser Verbundbahn 1 ist das Bauelement 7 mittels der Selbstklebeschicht 12 aufgeklebt.
Dabei überspannt die Verbundbahn 1 auch Fugen 10 und Risse 11 im Untergrund. Dehnungen aufgrund der Fugen 10 und Risse 11 werden aufgefangen.
Die Verbundbahn 1 kann eine Dicke zwischen 0,5 mm und 5 mm besitzen.

### Bezugszeichen

- 1: Verbundbahn
- 2: Kunststofffolie
- 3: Gewebeschicht
- 4: Abdeckvlies
- 5: Sand-Kunststoffkleber-Mischung
- 6: Geweberaster
- 7: Bauelement
- 8: Kleber
- 9: Untergrund
- 10: Fuge
- 11: Riss
- 12: Selbstklebeschicht
- 13: Schutzfolie

## Patentansprüche

1. Verbundbahn (1) für die Verklebung von flachen Bauelementen (7) auf harten Untergründen (9), bestehend aus fest miteinander verbundenen Schichten, nämlich aus einer Kunststofffolie (2), einer darüber liegenden Gewebeschicht (3) und einer Abdeckvliesschicht (4), wobei in der Gewebeschicht (3) ein mineralischer Füllstoff (5) mit einem Kunststoffkleber gebunden ist, **dadurch gekennzeichnet, dass** die Kunststofffolie mit einer darauf befindlichen Selbstklebeschicht eine äußere Schicht bildet, auf die flache Bauelemente aufklebbar sind.

2. Verbundbahn nach Anspruch 1, **dadurch gekennzeichnet, dass** die Gewebeschicht (3) ein grobes Raster mit einer Maschenweite von 1,5 bis 4 mm mal 3 bis 8 mm besitzt.

3. Verbundbahn nach Anspruch 1, **dadurch gekennzeichnet, dass** die Schichten (2, 3, 5) luftpolsterfrei miteinander verbunden sind.

4. Verbundbahn nach Anspruch 1, **dadurch gekennzeichnet, dass** der mineralische Füllstoff (5) aus Sand besteht.

5. Verbundbahn nach Anspruch 1, **dadurch gekennzeichnet, dass** der Kunststoffkleber eine Hotmelt-Kleber ist.

6. Verbundbahn nach Anspruch 1, **dadurch gekennzeichnet, dass** die Gewebeschicht (3) aus Kunststofffasern besteht.

7. Verbundbahn nach Anspruch 1, **dadurch gekennzeichnet, dass** das Abdeckvlies (4) aus Kunststofffasern bestehen.

8. Verbundbahn nach Anspruch 1, **dadurch gekennzeichnet, dass** die Gesamtdicke der Verbundbahn (1) zwischen 0,5 mm und 5 mm beträgt.

9. Verbundbahn nach einem der vorstehenden Ansprüche, **dadurch gekennzeichnet, dass** die Selbstklebeschicht (12) vor der Verlegung der Verbundbahn (1) mit einer Schutzfolie (13) abgedeckt ist.

## Claims

1. Compound sheet (1) for sticking flat components (7) on hard surfaces (9), consisting of fixed- interconnected layers, namely a plastic film (2), an overlaying fabric layer (3) and a fabric cover (4), wherein in the fabric layer (3) a mineral filler (5) is bound with a plastic adhesive, **characterized in that** the plastic film (2), together with a self-adhesive layer (12), forms an outer layer onto which flat components (7) can be fixed.

2. Compound sheet according to claim 1, **characterized in that** the fabric layer (3) has a coarse grid with a mesh size of 1.5 mm to 4 mm by 3 mm to 8 mm.

3. Compound sheet according to claim 1, **characterized in that** the layers (2, 3, 5) are joined together without air cushion.

4. Compound sheet according to claim 1, **characterized in that** the mineral filler (5) consists of sand.

5. Compound sheet according to claim 1, **characterized in that** the plastic adhesive is a hot-melt adhesive.

6. Compound sheet according to claim 1, **characterized in that** the fabric layer (3) consists of synthetic fibres.

7. Compound sheet according to claim 1, **characterized in that** the fabric cover (4) consists of synthetic fibres.

8. Compound sheet according to claim 1, **characterized in that** the total thickness of the compound sheet (1) is between 0.5 mm and 5 mm.

9. Compound sheet according to one of the preceding claims, **characterized in that** before laying out the compound sheet (1), the self-adhesive layer (12) is covered by a protective film (13).

## Revendications

1. Bande composite (1) pour le collage des composants plats (7) sur des surfaces dures (9), se composant des couches solidement interconnectées, soit un film plastique (2), une couche de tissu (3) au-dessus dudit film, et une couverture en tissu (4), dans lequel dans la couche de tissu (3) un agent de charge minéral (5) est fixé par un adhésif plastique, **caractérisée en ce que** le film plastique (2) et une couche auto-adhésive (12) appliquée sur celui-ci forment une couche extérieure sur laquelle des composants plats (7) peuvent être collés.

2. Bande composite selon la revendication 1, **caractérisée en ce que** la couche de tissu (3) présente une grille grossière, à mailles dimensionnées de 1,5 mm à 4 mm par 3 mm à 8 mm.

3. Bande composite selon la revendication 1, **caractérisée en ce que** les couches (2, 3, 5) sont liées sans coussin d'air.

4. Bande composite selon la revendication 1, **caractérisée en ce que** l'agent de charge minéral (5) consiste en sable.

5. Bande composite selon la revendication 1, **caractérisée en ce que** l'adhésif plastique est une colle thermofusible.

6. Bande composite selon la revendication 1, **caractérisée en ce que** la couche de tissu (3) consiste en fibres synthétiques.

7. Bande composite selon la revendication 1, **caractérisée en ce que** la housse de tissu (4) consiste en fibres synthétiques.

8. Bande composite selon la revendication 1, **caractérisée en ce que** l'épaisseur totale de la bande composite (1) est d'entre 0,5 mm et 5 mm.

9. Bande composite selon l'une des revendications précédentes, **caractérisée en ce qu'**avant la pose de la bande composite (1), la couche auto-adhésive (12) est recouverte par un film protecteur (13).
